# EUROPEAN PATENT APPLICATION

(11) **EP 4 643 974 A2**
(43) Date of publication of application: **05.11.2025**
(21) Application number: 25195468.1
(22) Date of filing: 23.10.2020
(51) Int. Cl.: B01D 46/24

(54) **CLOTHES DRYING DEVICE**

(30) Priority: 26.11.2019 CN 201911175993; 26.11.2019 CN 201911175996; 26.11.2019 CN 201911177009; 26.11.2019 CN 201911177013
(62) Divisional of application: 20894389.4
(71) Applicant: Qingdao Haier Drum Washing Machine Co., Ltd., Qingdao Shandong 266101 (CN); Haier Smart Home Co., Ltd., Shandong 266101 (CN)
(72) Inventor: LI, Quande, Qingdao, Shandong, 266101 (CN); BING, Jindong, Qingdao, Shandong, 266101 (CN); WANG, Jian, Qingdao, Shandong, 266101 (CN); YANG, Kun, Qingdao, Shandong, 266101 (CN); LIU, Xiujiao, Qingdao, Shandong, 266101 (CN)
(74) Representative: Bauer PSU PartG mbB

(57) **Abstract**

A clothes drying device, wherein a lint cleaning component (6) and a lint collecting component are both arranged on a mounting component, and the mounting component is arranged on a box body assembly, so that the lint cleaning component (6) and the lint collecting component are arranged at a centralized position in the clothes dryer. The present invention solves the problem in existing clothes dryers that a fiber removing component and a collecting container are arranged at dispersed positions on a clothes dryer and occupy a large amount of space, which affects the overall layout of the clothes dryer such that the overall structure of the clothes dryer is not compact, and downgrades the user experience.

## Description

The present application is a divisional application of European Patent Application 20 894 389.4 which is derived from PCT/CN2020/123030.

### FIELD

The present disclosure relates to the technical field of clothing drying apparatus, and specifically relates to a clothing drying apparatus.

### BACKGROUND

A clothing drying apparatus is a common clothing treatment apparatus that can dry the clothing in daily life. Before the clothing drying apparatus appeared, people needed to put the washed clothing on hangers, then hang the hangers at a dry and ventilated place, and wait for the clothing to dry naturally. This method of drying the clothing not only takes a long time, but also the clothing will be easily deformed when it is put on the hanger to dry naturally. In addition, the clothing is usually hung outdoors for drying, which will affect the aesthetic appearance; at the same time, the clothing can be easily contaminated by dust. With the continuous improvement of the level of production technology, there arise many kinds of clothing drying apparatuses on the market. The appearance of clothing drying apparatus enables users to quickly dry the washed clothing, which saves time for the user time and prevents the clothing from being deformed due to being put on the hanger, while also reducing the possibility of contaminating the clothing during the drying process.

The clothing drying apparatus can produce a large amount of lint in the process of drying the clothing, and the lint is filtered out in the existing clothing drying apparatuses by providing a filter screen in an air duct. Since the air duct is closed and there are many internal parts and components in the air duct, the structure is complex, which is not advantageous for later maintenance of the apparatus.

Accordingly, there is a need in the art for a new clothing drying apparatus to solve the above problem.

### SUMMARY

In order to solve the above problem in the prior art pointed out in the third background art, that is, to solve the problem that existing clothing drying apparatuses have many parts and components and the structure is complex, which is not advantageous for later maintenance of the apparatus, the third technical solution of the present disclosure provides a clothing drying apparatus, which includes a cabinet, a support mechanism, a lint cleaning and collecting assembly, and an annular filter member; the support mechanism is arranged on the cabinet, and the annular filter member is connected with a drying drum of the clothing drying apparatus and can rotate when driven by the drying drum; the support mechanism is formed with an accommodating structure capable of accommodating the lint cleaning and collecting assembly, and the support mechanism is also formed with a ventilation structure that communicates an air duct of the clothing drying apparatus with an interior of the drying drum; during the rotation of the annular filter member, the lint cleaning and collecting assembly can clean up and collect the lint on the annular filter member.

In a preferred technical solution of the above clothing drying apparatus, the support mechanism includes a first support plate, a second support plate and an annular connecting plate; the annular connecting plate is connected between the first support plate and the second support plate, at least one of the first support plate and the second support plate is connected with the cabinet, and both the accommodating structure and the ventilation structure are formed on the annular connecting plate.

In a preferred technical solution of the above clothing drying apparatus, the support mechanism also includes a connecting frame, and the second support plate is connected with the cabinet through the connecting frame.

In a preferred technical solution of the above clothing drying apparatus, the lint cleaning and collecting assembly includes an installation member, a lint cleaning member and a lint collecting member, in which the lint cleaning member and the lint collecting member are both arranged on the installation member, and the installation member is accommodated in the accommodating structure.

In a preferred technical solution of the above clothing drying apparatus, the lint cleaning member includes a connecting rod and a scraper that are connected, the connecting rod is snap-fit on the installation member, and the scraper is arranged close to or against the annular filter member.

In a preferred technical solution of the above clothing drying apparatus, the lint collecting member includes a lint collecting box which is detachably connected with the installation member, and a lint collecting port of the lint collecting box is located below the lint cleaning member.

In a preferred technical solution of the above clothing drying apparatus, the lint collecting port is arranged gradually opened in a direction approaching the lint cleaning member.

In a preferred technical solution of the above clothing drying apparatus, the annular filter member includes an annular filter bracket and a plurality of arc-shaped filter screens; the annular filter bracket is connected with the drying drum, the plurality of arc-shaped filter screens are all detachably connected with the annular filter bracket, and the plurality of arc-shaped filter screens are arranged in sequence in a circumferential direction of the annular filter bracket.

In a preferred technical solution of the above clothing drying apparatus, the clothing drying apparatus is a front-open drum clothing dryer, the support mechanism is arranged on a front panel of the cabinet, and the support mechanism is located between the front panel and the drying drum.

In a preferred technical solution of the above clothing drying apparatus, the support mechanism is provided with a door lock installation structure.

It can be understood by those skilled in the art that in the preferred technical solutions of the present disclosure, the clothing drying apparatus includes a cabinet, a support mechanism, a lint cleaning and collecting assembly, and an annular filter member; the support mechanism is arranged on the cabinet, the support mechanism is formed with an accommodating structure capable of accommodating the lint cleaning and collecting assembly, and the support mechanism is also formed with a ventilation structure that communicates an air duct of the clothing drying apparatus with an interior of the drying drum. Through such an arrangement, firstly, the lint in the clothing drying apparatus can be filtered out by the rotating annular filter member and cleaned up and collected by the lint cleaning and collecting assembly, thereby avoiding the accumulation of lint in the drying drum, and further improving the cleanliness of the interior of the drying drum. Secondly, the support mechanism not only enables the lint cleaning and collecting assembly to be accommodated, but also enables the drying drum to be communicated with the air duct of the clothing drying apparatus, that is, the support mechanism can realize various functions, thereby reducing the number of parts and components and simplifying the structure of the clothing drying apparatus, thus facilitating later maintenance of the clothing drying apparatus.

Further, the lint cleaning member includes a connecting rod and a scraper that are connected, the connecting rod is snap-fit on the installation member, and the scraper is arranged close to or against the annular filter member. Through such an arrangement, the lint cleaning member can be conveniently detached or installed, so that when the lint cleaning member is damaged, the user only needs to take out the lint cleaning member and replace it, without the need to take out the whole lint cleaning and collecting assembly for replacement or maintenance, thus facilitating later maintenance of the clothing drying apparatus, reducing the cost of the user's later maintenance of the clothing drying apparatus, and improving the user experience.

Further, the lint collecting member includes a lint collecting box which is detachably connected with the installation member, and a lint collecting port of the lint collecting box is located below the lint cleaning member. Through such an arrangement, the lint collecting box can be detached or installed, so that when the lint collecting box is damaged or the lint needs to be cleaned up, the user only needs to take out the lint collecting box and replace it or clean up the lint, without the need to take out the whole lint cleaning and collecting assembly, thus facilitating later maintenance of the clothing drying apparatus and reducing the cost of the user's later maintenance of the clothing drying apparatus; at the same time, the user's operation of cleaning up the lint is also facilitated, and the user experience is improved.

Further, the lint collecting port is arranged gradually opened in a direction approaching the lint cleaning member. Through such an arrangement, an opening area of one end of the lint collecting port that is close to the lint cleaning member is made larger, thereby making it easier for the lint cleaned up from the annular filter member to enter the lint collecting box, and further improving the lint collection effect.

Further, the annular filter member includes an annular filter bracket and a plurality of arc-shaped filter screens; the annular filter bracket is connected with the drying drum, the plurality of arc-shaped filter screens are all detachably connected with the annular filter bracket, and the plurality of arc-shaped filter screens are arranged in sequence in a circumferential direction of the annular filter bracket. Through such an arrangement, the arc-shaped filter screens can be driven to rotate without the need to additionally provide a driving device in the clothing drying apparatus, and the plurality of arc-shaped filter screens can be removed from the annular filter bracket respectively, thus facilitating removing the arc-shaped filter screens for replacement or cleaning, making it convenient for the user to operate, and improving the user experience.

Further, the clothing drying apparatus is a front-open drum clothing dryer, the support mechanism is arranged on a front panel of the cabinet, and the support mechanism is located between the front panel and the drying drum. Through such an arrangement, the support mechanism is arranged at a position closer to a front opening of the drying drum, which makes it easier to detach the lint cleaning member, the lint collecting box and the arc-shaped filter screens, thus further facilitating the user's operations and further improving the user experience.

Further, the support mechanism is provided with a door lock installation structure. Through such an arrangement, the support mechanism can be used as the basis for installing a door lock, thereby making the functions of the support mechanism further diversified, further simplifying the structure of the clothing drying apparatus, and facilitating later maintenance of the clothing drying apparatus.

### BRIEF DESCRIPTION OF DRAWINGS

The clothing drying apparatus in a third embodiment of the present disclosure will be described below with reference to the accompanying drawings. In the drawings:
FIG. 1 is a schematic view showing a relative arrangement position of a drying drum and a front panel in the clothing drying apparatus in the third embodiment of the present disclosure;
FIG. 2 is a schematic view of the drying drum, a connecting frame, a support mechanism, a lint cleaning and collecting assembly and a door lock installation structure in the clothing drying apparatus in the third embodiment of the present disclosure;
FIG. 3 is a schematic structural view of the lint cleaning and collecting assembly and an annular filter member in the clothing drying apparatus in the third embodiment of the present disclosure (not all the plurality of arc-shaped filter screens are shown);
FIG. 4 is a schematic structural view of the support mechanism in the third embodiment of the present disclosure;
FIG. 5 is a partially enlarged view of an encircled part A in FIG. 28;
FIG. 6 is a schematic view showing an assembly relation of the lint cleaning and collecting assembly in the clothing drying apparatus in the third embodiment of the present disclosure; and
FIG. 7 is a partially enlarged view of an encircled part B in FIG. 30;

### List of reference signs:

10: support mechanism; 11: first support plate; 12: second support plate; 13: annular connecting plate; 14: ventilation hole; 15: opening; 16: connecting frame; 20: lint cleaning and collecting assembly; 21: installation box; 211: installation strip; 22: connecting rod; 23: scraper; 24: lint collecting box; 241: lint collecting port; 30: drying drum; 51: annular filter bracket; 52: arc-shaped filter screen; 60: door lock installation structure; 70: front panel.

The clothing drying apparatus in a fourth embodiment of the present disclosure will be described below with reference to the accompanying drawings and in connection with a front-open drum clothing dryer. In the drawings:

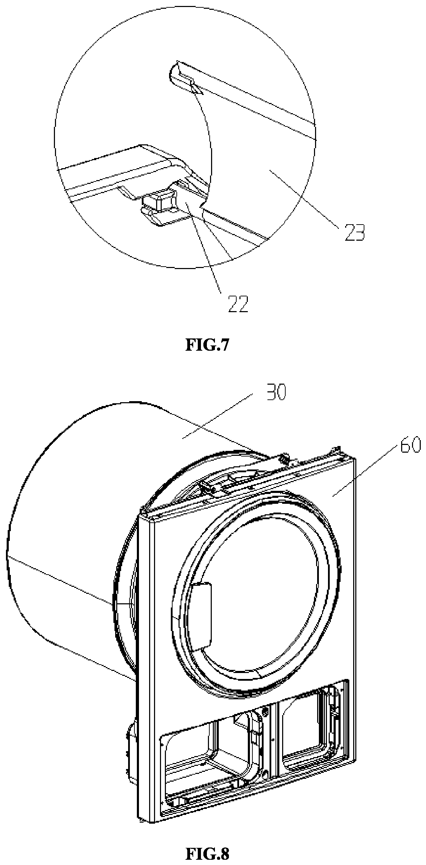

FIG. 8 is a schematic view showing a relative arrangement position of a drying drum and part of a cabinet in the front-open drum clothing dryer in the fourth embodiment of the present disclosure;

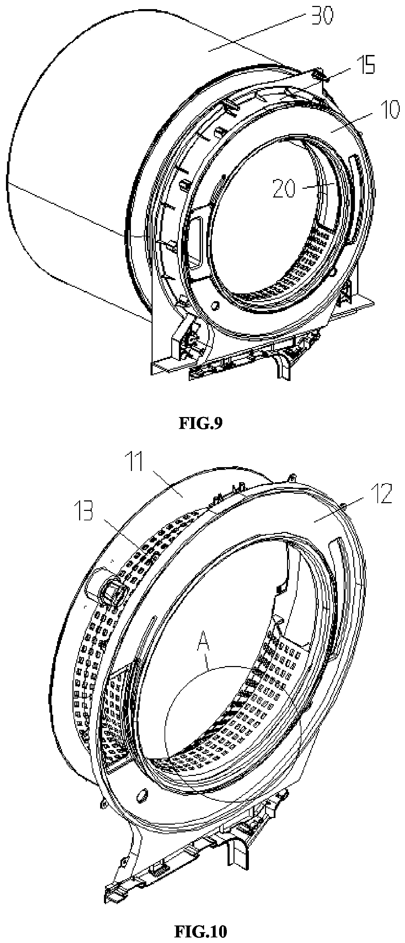

FIG. 9 is a schematic view of the drying drum, a connecting frame, a support mechanism and a lint cleaning and collecting assembly in the front-open drum clothing dryer in the fourth embodiment of the present disclosure;
FIG. 10 is a schematic structural view of the support mechanism in the front-open drum clothing dryer in the fourth embodiment of the present disclosure;

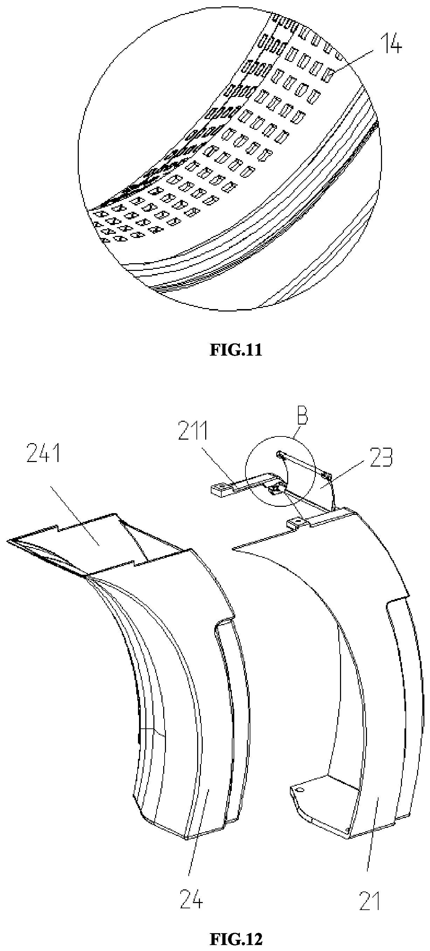

FIG. 11 is a partially enlarged view of an encircled part A in FIG. 34;
FIG. 12 is a schematic view showing an assembly relation of the lint cleaning and collecting assembly in the front-open drum clothing dryer in the fourth embodiment of the present disclosure;

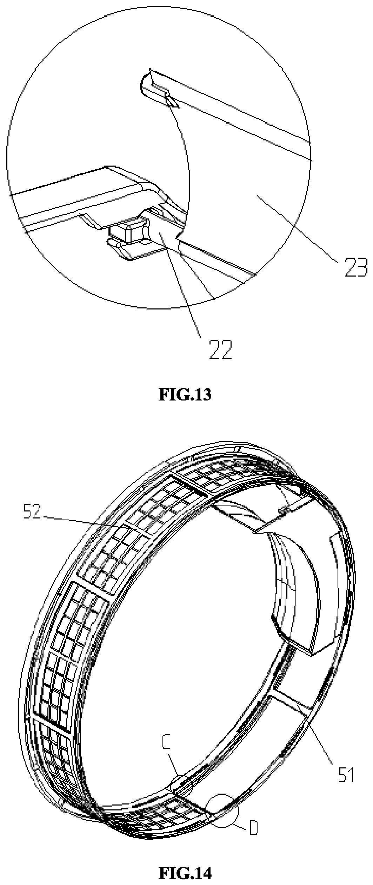

FIG. 13 is a partially enlarged view of an encircled part B in FIG. 36;
FIG. 14 is a schematic structural view of the lint cleaning and collecting assembly and an annular filter member in the front-open drum clothing dryer in the fourth embodiment of the present disclosure (not all the plurality of arc-shaped filter screens are shown);

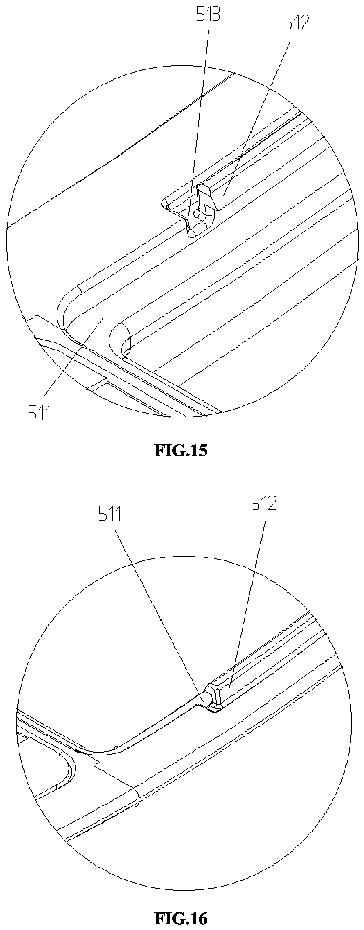

FIG. 15 is a partially enlarged view of an encircled part C in FIG. 38; and
FIG. 16 is a partially enlarged view of an encircled part D in FIG. 38;

### List of reference signs:

10: support mechanism; 11: first support plate; 12: second support plate; 13: annular connecting plate; 14: ventilation hole; 15: connecting frame; 20: lint cleaning and collecting assembly; 21: installation box; 211: installation strip; 22: connecting rod; 23: scraper; 24: lint collecting box; 241: lint collecting port; 30: drying drum; 51: annular filter bracket; 511: annular accommodating groove; 512: snap-fit member; 513: avoidance groove; 52: arc-shaped filter screen; 60: cabinet.

### DETAILED DESCRIPTION

Preferred embodiments of the present disclosure will be described below with reference to the accompanying drawings. It should be understood by those skilled in the art that these embodiments are only used to explain the technical principle of the present disclosure, and are not intended to limit the scope of protection of the present disclosure. For example, although the lint collecting member and the lint cleaning member in the drawings are installed on a right side of the support mechanism, this positional relationship is not invariable, and those skilled in the art can make adjustments thereto as needed so as to adapt to specific application scenes. For example, the lint collecting member and the lint cleaning member may be installed on an upper side, a left side or another position of the support mechanism, or the lint collecting member and the lint cleaning member may also be both installed at different positions in the support mechanism at the same time.

It should be noted that in the description of the present disclosure, terms indicating directional or positional relationships, such as "center", "upper", "lower", "left", "right", "vertical", "horizontal", "inner", "outer" and the like, are based on the directional or positional relationships shown in the accompanying drawings. They are only used for ease of description, and do not indicate or imply that the device or element must have a specific orientation, or be constructed or operated in a specific orientation, and therefore they should not be considered as limitations to the present disclosure. In addition, terms "first", "second" and "third" are only used for descriptive purposes, and should not be interpreted as indicating or implying relative importance.

In addition, it should also be noted that in the description of the present disclosure, unless otherwise clearly specified and defined, terms "install", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be internal communication between two elements. For those skilled in the art, the specific meaning of the above terms in the present disclosure can be interpreted according to specific situations.

In view of the problem pointed out in the third background art that existing clothing drying apparatuses have many parts and components and the structure is complex, the third embodiment of the present disclosure provides a clothing drying apparatus, aiming at avoiding accumulation of lint in the drying drum, increasing internal cleanliness of the drying drum, and reducing the number of parts and components, which simplifies the structure of the clothing drying apparatus and facilitates later maintenance of the clothing drying apparatus.

It should be noted that the clothing drying apparatus in the third embodiment of the present disclosure may be a top-open drum clothing dryer, a front-open drum clothing dryer, etc. The adjustment and change to the specific structure of the clothing drying apparatus do not constitute limitations to the present disclosure, and they should all be defined within the scope of protection of the present disclosure.

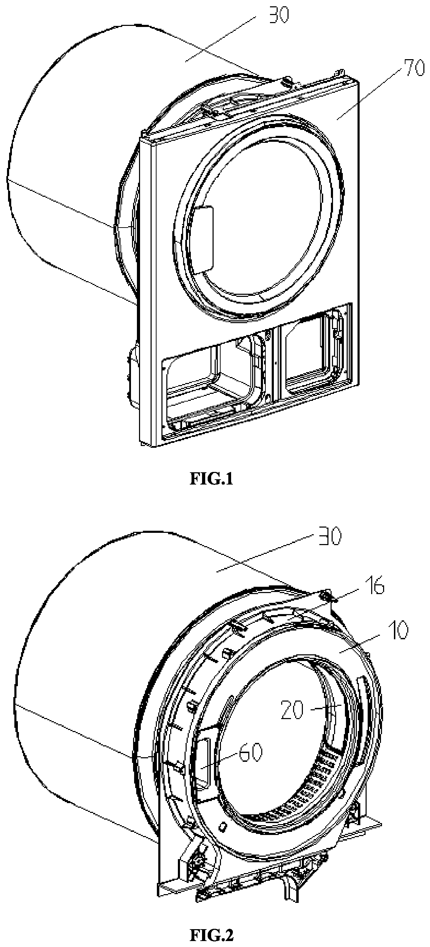

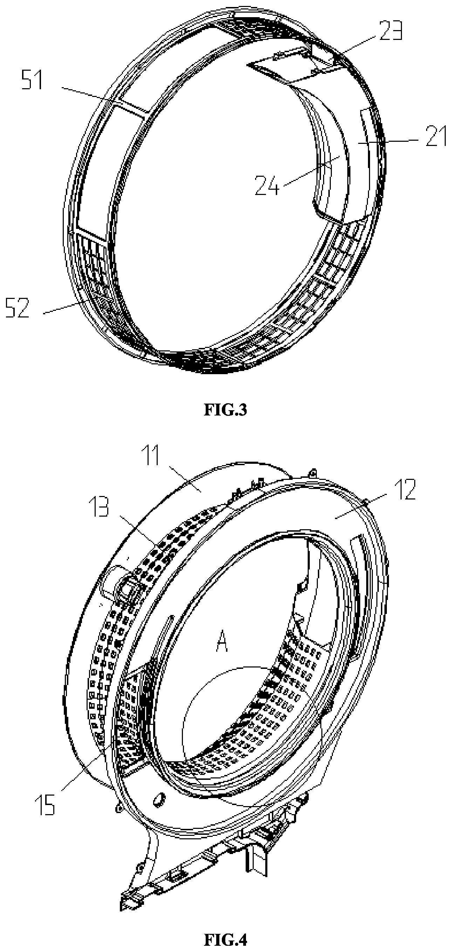

Specifically, as shown in FIGS. 1 and 3, the clothing drying apparatus of the present disclosure includes a cabinet (the front panel shown in FIG. 25 is a part of the cabinet), a support mechanism 10, a lint cleaning and collecting assembly 20, and an annular filter member; the support mechanism 10 is arranged on the cabinet, and the annular filter member is connected with a drying drum 30 of the clothing drying apparatus and can rotate when driven by the drying drum 30; the support mechanism 10 is formed with an accommodating structure capable of accommodating the lint cleaning and collecting assembly 20, and the support mechanism 10 is also formed with a ventilation structure that communicates an air duct of the clothing drying apparatus with an interior of the drying drum 30; during the rotation of the annular filter member, the lint cleaning and collecting assembly 20 can clean up and collect the lint on the annular filter member. When the clothing drying apparatus is working, the drying drum 30 drives the annular filter member to rotate, the air in the drying drum 30 enters the air duct through the ventilation structure and the annular filter member in sequence under the action of a fan in the air duct, and the lint entrained in the air in the drying drum 30 is filtered out by the rotating annular filter member. The rotating annular filter member moves relative to the lint cleaning and collecting assembly 20, so that the lint cleaning and collecting assembly 20 can clean up and collect the lint accumulated on the annular filter member. The lint cleaning and collecting assembly 20 can adopt the structure of a brush and a lint collecting box, or can adopt the structure of a scraper and a lint collecting box. Those skilled in the art can flexibly set the specific structure of the lint cleaning and collecting assembly 20 in practical applications, as long as the lint cleaning and collecting assembly 20 can clean up and collect the lint on the annular filter member. The annular filter member may be an annular part provided with a large number of fine holes on its annular wall surface, or may be a combination of an annular filter bracket and a filter screen arranged on the annular filter bracket, and those skilled in the art can flexibly set the specific structure of the annular filter member in practical applications, as long as the annular filter member can accumulate the lint on it. The support mechanism 10 may be a support frame, a support plate or a combination thereof, etc. Those skilled in the art can flexibly set the specific structure of the support mechanism 10 in practical applications. The adjustment and change to the specific structure of the support mechanism 10 do not constitute limitations to the present disclosure, and they should all be defined within the scope of protection of the present disclosure. The accommodating structure may be a space formed by the support mechanism 10, or it may be an accommodating box separately provided on the support mechanism 10 and capable of accommodating the lint cleaning and collecting assembly 20. Those skilled in the art can flexibly set the specific structure of the accommodating structure in practical applications, as long as the accommodating structure can accommodate the lint cleaning and collecting assembly 20. The ventilation structure may be ventilation holes formed on the support mechanism 10, or may be a pipeline formed on the support mechanism 10. Those skilled in the art can flexibly set the specific structure of the ventilation structure in practical applications, as long as the ventilation structure can communicate the air duct of the clothing drying apparatus with the interior of the drying drum 30.

Preferably, as shown in FIG. 4, the support mechanism 10 includes a first support plate 11, a second support plate 12 and an annular connecting plate 13; the annular connecting plate 13 is connected between the first support plate 11 and the second support plate 12, at least one of the first support plate 11 and the second support plate 12 is connected with the cabinet, and both the accommodating structure and the ventilation structure are formed on the annular connecting plate 13. In practical applications, the first support plate 11 may be connected with the cabinet, or the second support plate 12 may be connected with the cabinet, or the first support plate 11 and the second support plate 12 may be connected with the cabinet at the same time. In a possible situation, the accommodating structure is a space formed by the first support plate 11, the second support plate 12 and the annular connecting plate 13, and the ventilation structure is ventilation holes 14 formed on the annular connecting plate 13. The ventilation holes 14 on the annular connecting plate 13 shown in FIGS. 28 and 29 are a plurality of small rectangular holes. In fact, the ventilation holes 14 may also be circular holes, and those skilled in the art can flexibly set the shape of the ventilation holes 14 in practical applications. The adjustment and change to the shape of the ventilation holes 14 do not constitute limitations to the present disclosure, and they should all be defined within the scope of protection of the present disclosure. In another possible situation, the accommodating structure is the space formed by the first support plate 11, the second support plate 12 and the annular connecting plate 13, and the ventilation structure is a ventilation port with a larger opening area formed on the annular connecting plate 13.

Preferably, as shown in FIGS. 1 and 2, the support mechanism 10 further includes a connecting frame 16, and the second support plate 12 is connected with the cabinet through the connecting frame 16. The connecting frame 16 can not only connect the support mechanism 10 to the cabinet, but also plays a role of supporting the first support plate 11, the second support plate 12 and the annular connecting plate 13. Of course, the support mechanism 10 may also not include the connecting frame 16. In this situation, the support mechanism 10 may be connected to the cabinet 60 through the second support plate 12.

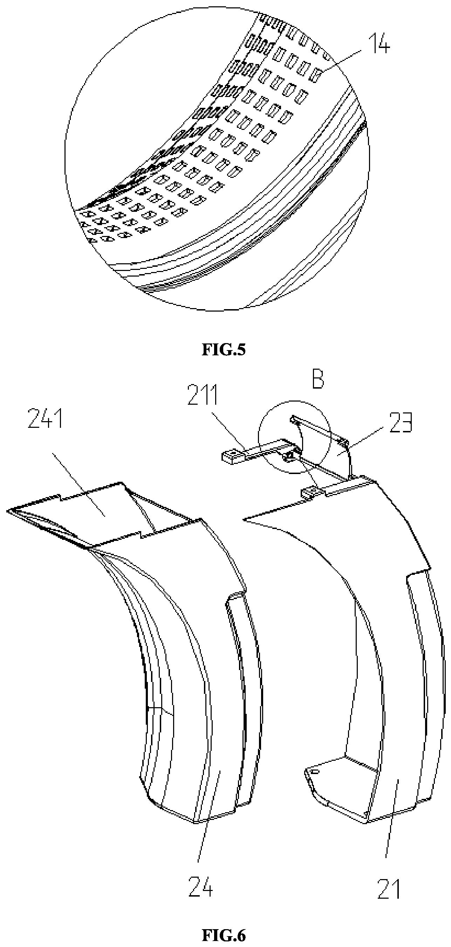

Preferably, as shown in FIG. 6, the lint cleaning and collecting assembly 20 includes an installation member, a lint cleaning member and a lint collecting member; the lint cleaning member and the lint collecting member are both arranged on the installation member, and the installation member is accommodated in the accommodating structure. The installation member may be an installation box, an installation plate and/or an installation rack, etc., the lint cleaning member may be a scraper, a brush or a combination thereof, etc., and the lint collecting member may be a lint collecting box, a lint collecting pocket, or a lint collecting groove that is formed on the installation member. Those skilled in the art can flexibly set the specific structures of the installation member, the lint cleaning member and the lint collecting member in practical applications, as long as the lint on the annular filter member can be cleaned up by the lint cleaning member, the cleaned up lint can be collected by the lint collecting member, and the installation member can be used as an installation carrier of the lint cleaning member and the lint collecting member. Of course, in practical applications, the lint cleaning and collecting assembly 20 may also not include the installation member; instead, the lint cleaning member and the lint collecting member are directly installed on the support mechanism 10.

Preferably, as shown in FIGS. 6 and 7, the lint cleaning member includes a connecting rod 22 and a scraper 23 that are connected, the connecting rod 22 is snap-fit on the installation member, and the scraper 23 is arranged close to or against the annular filter member. When the annular filter member rotates since being driven by the rotating drying drum 30, the annular filter member moves relative to the scraper 23, so that the scraper 23 can clean up the lint accumulated on the annular filter member. In a possible situation, with continued reference to FIGS. 30 and 31, the installation member is an installation box 21, and two installation strips 211 that are threaded with the support mechanism 10 protrude from a side plate of the installation box 21; the installation strips 211 are formed with openings, and two ends of the connecting rod 22 are snap-fit into the openings of the two installation strips 211 respectively.

Preferably, as shown in FIG. 6, the lint collecting member includes a lint collecting box 24 which is detachably connected with the installation member, and a lint collecting port 241 of the lint collecting box 24 is located below the lint cleaning member. The lint collecting box 24 can be connected with the installation member by means of snap-fit, bonding or magnetic adsorption, so that the lint collecting box 24 can be detached from the installation member. In addition, the lint cleaning member may also be set flush with the lint collecting port 241, and a guide structure such as a guide groove is formed on the lint collecting port 241, so as to guide the lint cleaned up by the lint cleaning member to the lint collecting port 241.

Preferably, with continued reference to FIG. 6, the lint collecting port 241 is arranged gradually opened in a direction approaching the lint cleaning member. Of course, the lint collecting port 241 may also be arranged to keep the same opening degree in the direction approaching the lint cleaning member, and those skilled in the art can flexibly set the specific structure of the lint collecting port 241 in practical applications, as long as the lint cleaned up from the annular filter member can be collected in the lint collecting box 24.

Preferably, as shown in FIG. 3, the annular filter member includes an annular filter bracket 51 and a plurality of arc-shaped filter screens 52; the annular filter bracket 51 is connected with the drying drum 30, the plurality of arc-shaped filter screens 52 are all detachably connected with the annular filter bracket 51, and the plurality of arc-shaped filter screens 52 are arranged in sequence in a circumferential direction of the annular filter bracket 51. The arc-shaped filter screens 52 and the annular filter bracket 51 can be connected by snap-fit or by threads. Those skilled in the art can flexibly set the connection means of the arc-shaped filter screens 52 and the annular filter bracket 51 in practical applications, as long as the connection means can realize the detachable connection between the arc-shaped filter screens 52 and the annular filter bracket 51. In the above, the plurality of arc-shaped filter screens 52 can completely cover the annular filter bracket 51 all around.

Preferably, as shown in FIGS. 1 and 2, the clothing drying apparatus is a front-open drum clothing dryer, the support mechanism 10 is arranged on a front panel 70 of the cabinet, and the support mechanism 10 is located between the front panel 70 and the drying drum 30. Of course, the support mechanism 10 may also be arranged on a top plate of the cabinet, and the support mechanism 10 is located between the front panel and the drying drum 30.

Preferably, as shown in FIG. 2, in the front-open drum clothing dryer, the support mechanism 10 is provided with a door lock installation structure 60. Specifically, the door lock installation structure 60 may be a door lock installation box formed on the support mechanism 10, or a door lock installation box arranged on the support mechanism 10 and an opening 15 formed on the support mechanism 10 and enabling the door lock installation box to be arranged on the support mechanism 10. Further preferably, the lint cleaning and collecting assembly 20 is arranged near the door hinge of the front-open drum clothing dryer, and the door lock installation structure 60 is arranged near the side opposite to the door hinge. A vertical length of the lint collecting member in the lint cleaning and collecting assembly 20 can be increased through such an arrangement, thereby increasing the volume of the lint collecting member, reducing the number of times the user cleans up the lint, and improving the user experience. In addition, since the door lock in the front-open drum clothing dryer has a large volume, this arrangement also enables the door lock installation structure 60 to avoid the door hinge, so that a larger space can be provided to arrange the door lock installation structure 60 to install the door lock, thus facilitating the installation and maintenance of the door lock, and enabling the space of the front-open drum clothing dryer to be more rationally utilized.

In view of the problem pointed out in the fourth background art that air in the drying drum of existing clothing drying apparatuses cannot smoothly enter the air duct, which will lead to a poor user experience, the fourth embodiment of the present disclosure provides a front-open drum clothing dryer, aiming at avoiding accumulation of lint in the drying drum, increasing internal cleanliness of the drying drum, and reducing the number of parts and components, which simplifies the structure of the front-open drum clothing dryer and facilitates later maintenance of the front-open drum clothing dryer, so that the air in the drying drum can smoothly enter the air duct, thereby improving the efficiency of filtering the lint and improving the user experience.

Specifically, as shown in FIGS. 8 to 14, the front-open drum clothing dryer includes a cabinet 60, a support mechanism 10, a lint cleaning and collecting assembly 20, and an annular filter member; the support mechanism 10 is arranged on the cabinet 60, and the annular filter member is connected with a drying drum 30 of the front-open drum clothing dryer and can rotate when driven by the drying drum 30; the lint cleaning and collecting assembly 20 is arranged on the support mechanism 10, and the support mechanism 10 is formed with a ventilation structure that communicates an air duct of the front-open drum clothing dryer with an interior of the drying drum 30; a part of the support mechanism 10 that is close to the air duct is arranged obliquely so that air in the drying drum 30 can smoothly enter the air duct; during the rotation of the annular filter member, the lint cleaning and collecting assembly 20 can clean up and collect the lint on the annular filter member. In the air duct of the front-open drum clothing dryer, a condenser and a heater are arranged in sequence in the direction of air flow in the air duct. The condenser can condense steam in the air to remove the steam, and the heater can heat the air. Of course, a heat pump system can also be provided in the front-open drum clothing dryer to achieve the purpose of removing steam in the air in the air duct and heating the air. The air duct is provided with a device that enables the air to flow, such as a fan. When the front-open drum clothing dryer is working, under the action of the fan, the air in the air duct enters the drying drum 30, and then returns to the air duct from the drying drum 30, that is, the air circulates in the air duct and the drying drum 30. In the above process, the water vapor in the air flowing into the air duct is removed, and the air is heated. In the process of air circulation, the drying drum 30 drives the annular filter member to rotate, the air in the drying drum 30 enters the air duct through the ventilation structure and the annular filter member in sequence under the action of the fan in the air duct, and the lint entrained in the air in the drying drum 30 is filtered out by the rotating annular filter member. The rotating annular filter member moves relative to the lint cleaning and collecting assembly 20, so that the lint cleaning and collecting assembly 20 can clean up and collect the lint accumulated on the annular filter member. In an example in which the support mechanism 10, the lint cleaning and collecting assembly 20 and the annular filter member are all arranged at a front of the front-open drum clothing dryer (which is the case shown in FIG. 32), in this case, a part of the support mechanism 10 that is close to the air duct may be inclined toward the front of the front-open drum clothing dryer (which is the case shown in FIG. 34 and 35); of course, it is also possible that the part of the support mechanism 10 that is close to the air duct is inclined toward the rear of the front-open drum clothing dryer. Either of the specific inclination directions of the part of the support mechanism 10 that is close to the air duct is feasible, as long as the specific inclination direction enables the air to smoothly enter the air duct. The lint cleaning and collecting assembly 20 can adopt the structure of a brush and a lint collecting box, or can adopt the structure of a scraper and a lint collecting box. Those skilled in the art can flexibly set the specific structure of the lint cleaning and collecting assembly 20 in practical applications, as long as the lint cleaning and collecting assembly 20 can clean up and collect the lint on the annular filter member. The annular filter member may be an annular part provided with a large number of fine holes on its annular wall surface, or may be a combination of an annular filter bracket and a filter screen arranged on the annular filter bracket, and those skilled in the art can flexibly set the specific structure of the annular filter member in practical applications, as long as the annular filter member can accumulate the lint on it. The support mechanism 10 may be a support frame, a support plate or a combination thereof, etc. Those skilled in the art can flexibly set the specific structure of the support mechanism 10 in practical applications. The adjustment and change to the specific structure of the support mechanism 10 do not constitute limitations to the present disclosure, and they should all be defined within the scope of protection of the present disclosure. The ventilation structure may be ventilation holes formed on the support mechanism 10, or may be a pipeline formed on the support mechanism 10. Those skilled in the art can flexibly set the specific structure of the ventilation structure in practical applications, as long as the ventilation structure can communicate the air duct of the front-open drum clothing dryer with the interior of the drying drum 30.

Preferably, as shown in FIGS. 10 and 11, the support mechanism 10 includes a first support plate 11, a second support plate 12 and an annular connecting plate 13; the annular connecting plate 13 is connected between the first support plate 11 and the second support plate 12, at least one of the first support plate 11 and the second support plate 12 is connected with the cabinet 60, and the ventilation structure is formed on the annular connecting plate 13. A part of the annular connecting plate 13 that is close to the air duct is arranged obliquely so that air in the drying drum 30 can smoothly enter the air duct. In practical applications, the first support plate 11 may be connected with the cabinet 60, or the second support plate 12 may be connected with the cabinet 60, or the first support plate 11 and the second support plate 12 may be connected with the cabinet 60 at the same time. The ventilation holes 14 on the annular connecting plate 13 shown in FIG. 35 are a plurality of small rectangular holes. In fact, the ventilation holes 14 may also be circular holes, and those skilled in the art can flexibly set the shape of the ventilation holes 14 in practical applications. The adjustment and change to the shape of the ventilation holes 14 do not constitute limitations to the present disclosure, and they should all be defined within the scope of protection of the present disclosure.

Preferably, as shown in FIG. 10, the support mechanism 10 further includes a connecting frame 15, and the second support plate 12 is connected with the cabinet 60 through the connecting frame 15. The connecting frame 15 can not only connect the support mechanism 10 to the cabinet 60, but also plays a role of supporting the first support plate 11, the second support plate 12 and the annular connecting plate 13. Of course, the support mechanism 10 may also not include the connecting frame 15. In this situation, the support mechanism 10 may be connected to the cabinet 60 through the second support plate 12.

Preferably, as shown in FIGS. 12 and 13, the lint cleaning and collecting assembly 20 includes an installation member, a lint cleaning member and a lint collecting member; the lint cleaning member and the lint collecting member are both arranged on the installation member, and the installation member is arranged on the support mechanism 10. The installation member may be an installation box, an installation plate and/or an installation rack, etc., the lint cleaning member may be a scraper, a brush or a combination thereof, etc., and the lint collecting member may be a lint collecting box, a lint collecting pocket, or a lint collecting groove that is formed on the installation member. Those skilled in the art can flexibly set the specific structures of the installation member, the lint cleaning member and the lint collecting member in practical applications, as long as the lint on the annular filter member can be cleaned up by the lint cleaning member, the cleaned up lint can be collected by the lint collecting member, and the installation member can be used as an installation carrier of the lint cleaning member and the lint collecting member. Of course, in practical applications, the lint cleaning and collecting assembly 20 may also not include the installation member; instead, the lint cleaning member and the lint collecting member are directly installed on the support mechanism 10.

Preferably, as shown in FIG. 13, the lint cleaning member includes a connecting rod 22 and a scraper 23 that are connected, the connecting rod 22 is snap-fit on the installation member, and the scraper 23 is arranged close to or against the annular filter member. When the annular filter member rotates since being driven by the rotating drying drum 30, the annular filter member moves relative to the scraper 23, so that the scraper 23 can clean up the lint accumulated on the annular filter member. In a possible situation, as shown in FIGS. 36 and 37, the installation member is an installation box 21, and two installation strips 211 that are threaded with the support mechanism 10 protrude from a side plate of the installation box 21; the installation strips 211 are formed with openings, and two ends of the connecting rod 22 are snap-fit into the openings of the two installation strips 211 respectively.

Preferably, as shown in FIG. 12, the lint collecting member includes a lint collecting box 24 which is detachably connected with the installation member, and a lint collecting port 241 of the lint collecting box 24 is located below the lint cleaning member. The lint collecting box 24 can be connected with the installation member by means of snap-fit, bonding or magnetic adsorption, so that the lint collecting box 24 can be detached from the installation member. In addition, the lint cleaning member may also be set flush with the lint collecting port 241, and a guide structure such as a guide groove is formed on the lint collecting port 241, so as to guide the lint cleaned up by the lint cleaning member to the lint collecting port 241.

Preferably, as shown in FIG. 12, the lint collecting port 241 is arranged gradually opened in a direction approaching the lint cleaning member. Of course, the lint collecting port 241 may also be arranged to keep the same opening degree in the direction approaching the lint cleaning member, and those skilled in the art can flexibly set the specific structure of the lint collecting port 241 in practical applications, as long as the lint cleaned up from the annular filter member can be collected in the lint collecting box 24.

Preferably, as shown in FIG. 14, the annular filter member includes an annular filter bracket 51 and an annular filter screen, the annular filter bracket 51 is connected with the drying drum 30, and the annular filter screen is detachably connected with the annular filter bracket 51. The annular filter screen and the annular filter bracket 51 can be connected by snap-fit or by threads. Those skilled in the art can flexibly set the connection means of the annular filter screen and the annular filter bracket 51 in practical applications, as long as the connection means can realize the detachable connection between the annular filter screen and the annular filter bracket 51. More preferably, when the annular filter screen is installed on the annular filter bracket 51, an inner surface of the annular filter screen is flush with an inner surface of the annular filter bracket 51. The inner surface of the annular filter screen is the surface on a side of the annular filter screen where the lint is accumulated, and similarly, the inner surface of the annular filter bracket 51 is also the surface on a side where the lint is accumulated. Through such an arrangement, that is, the inner surface of the annular filter screen being flush with the inner surface of the annular filter bracket 51, the hand will not be easily scratched when removing or installing the annular filter screen.

Preferably, as shown in FIGS. 15 and 16, the annular filter bracket 51 is formed with an annular accommodating groove 511, the annular filter bracket 51 is provided with a plurality of snap-fit members 512, and the annular filter screen is snap-fit in the annular accommodating groove 511 through the plurality of snap-fit members 512. The snap-fit members 512 may be clasps, claws, etc., and those skilled in the art can flexibly set the specific structure of the snap-fit members 512 in practical applications, as long as the snap-fit members 512 can snap-fit the annular filter screen in the annular accommodating groove 511. Further preferably, the annular filter bracket 51 is further provided with avoidance grooves 513 that enable the snap-fit members 512 to easily snap-fit the annular filter screen. During the process of snap-fitting the annular filter screen into the annular accommodating groove 511 by the snap-fit members 512, the avoidance grooves 513 enable the snap-fit members 512 to be deformed to the largest extent, so that the user can place the annular filter screen in the annular accommodating groove 511 more conveniently. Similarly, when removing the annular filter screen from the annular accommodating groove 511, the user can also remove the annular filter screen more conveniently.

Preferably, as shown in FIG. 14, the annular filter screen includes a plurality of arc-shaped filter screens 52, the plurality of arc-shaped filter screens 52 are all detachably connected with the annular filter bracket 51, and the plurality of arc-shaped filter screens 52 are arranged in sequence in a circumferential direction of the annular filter bracket 51. The arc-shaped filter screens 52 and the annular filter bracket 51 can be connected by snap-fit or by threads. Those skilled in the art can flexibly set the connection means of the arc-shaped filter screens 52 and the annular filter bracket 51 in practical applications, as long as the connection means can realize the detachable connection between the arc-shaped filter screens 52 and the annular filter bracket 51. In the above, the plurality of arc-shaped filter screens 52 can completely cover the annular filter bracket 51 all round. In addition, in the above, the annular accommodating groove 511 may include a plurality of arc-shaped accommodating grooves, and the plurality of arc-shaped filter screens 52 correspond to the plurality of arc-shaped accommodating grooves in a one-to-one correspondence respectively.

Hitherto, the technical solutions of the present disclosure have been described in connection with the preferred embodiments shown in the accompanying drawings, but it is easily understood by those skilled in the art that the scope of protection of the present disclosure is obviously not limited to these specific embodiments. Without departing from the principles of the present disclosure, those skilled in the art can make equivalent changes or replacements to relevant technical features. All these technical solutions after such changes or replacements will fall within the scope of protection of the present disclosure.

## Claims

1. A clothing drying apparatus, wherein the clothing drying apparatus comprises a cabinet, a support mechanism, a lint cleaning and collecting assembly, and an annular filter member; the support mechanism is arranged on the cabinet, and the annular filter member is connected with a drying drum of the clothing drying apparatus and can rotate when driven by the drying drum; the support mechanism is formed with an accommodating structure capable of accommodating the lint cleaning and collecting assembly, and the support mechanism is also formed with a ventilation structure that communicates an air duct of the clothing drying apparatus with an interior of the drying drum;
during the rotation of the annular filter member, the lint cleaning and collecting assembly can clean up and collect the lint on the annular filter member.

2. The clothing drying apparatus according to claim 1, wherein the support mechanism comprises a first support plate, a second support plate and an annular connecting plate; the annular connecting plate is connected between the first support plate and the second support plate, at least one of the first support plate and the second support plate is connected with the cabinet, and both the accommodating structure and the ventilation structure are formed on the annular connecting plate.

3. The clothing drying apparatus according to claim 2, wherein the support mechanism also comprises a connecting frame, and the second support plate is connected with the cabinet through the connecting frame.

4. The clothing drying apparatus according to claim 1, wherein the lint cleaning and collecting assembly comprises an installation member, a lint cleaning member and a lint collecting member, the lint cleaning member and the lint collecting member are both arranged on the installation member, and the installation member is accommodated in the accommodating structure.

5. The clothing drying apparatus according to claim 4, wherein the lint cleaning member comprises a connecting rod and a scraper that are connected, the connecting rod is snap-fit on the installation member, and the scraper is arranged close to or against the annular filter member.

6. The clothing drying apparatus according to claim 4, wherein the lint collecting member comprises a lint collecting box which is detachably connected with the installation member, and a lint collecting port of the lint collecting box is located below the lint cleaning member.

7. The clothing drying apparatus according to claim 6, wherein the lint collecting port is arranged gradually opened in a direction approaching the lint cleaning member.

8. The clothing drying apparatus according to claim 1, wherein the annular filter member comprises an annular filter bracket and a plurality of arc-shaped filter screens; the annular filter bracket is connected with the drying drum, the plurality of arc-shaped filter screens are all detachably connected with the annular filter bracket, and the plurality of arc-shaped filter screens are arranged in sequence in a circumferential direction of the annular filter bracket.

9. The clothing drying apparatus according to any one of claims 1 to 8, wherein the clothing drying apparatus is a front-open drum clothing dryer, the support mechanism is arranged on a front panel of the cabinet, and the support mechanism is located between the front panel and the drying drum.

10. The clothing drying apparatus according to claim 9, wherein the support mechanism is provided with a door lock installation structure.

11. The clothing drying apparatus according to claim 1, wherein a part of the support mechanism that is close to the air duct is arranged obliquely so that air in the drying drum can smoothly enter the air duct.

12. The clothing drying apparatus according to claim 11, wherein the support mechanism comprises a first support plate, a second support plate and an annular connecting plate; the annular connecting plate is connected between the first support plate and the second support plate, at least one of the first support plate and the second support plate is connected with the cabinet, the ventilation structure is formed on the annular connecting plate, and a part of the annular connecting plate that is close to the air duct is arranged obliquely so that the air in the drying drum can smoothly enter the air duct.
